**Europäisches Patentamt**

**European Patent Office**

**Office européen des brevets**

(19)

(11) Veröffentlichungsnummer : **0 406 214 B1**

(12)

# EUROPÄISCHE PATENTSCHRIFT

(45) Veröffentlichungstag der Patentschrift :
**16.12.92 Patentblatt 92/51**

(51) Int. Cl.⁵ : **C08L 21/00,** C08K 5/07,
C08J 5/10

(21) Anmeldenummer : **90890147.3**

(22) Anmeldetag : **14.05.90**

(54) Kautschukmischung, die beim Vulkanisieren eine dauerhafte Bindung zu Kupferlegierungen eingeht und deren Verwendung.

Die Akte enthält technische Angaben, die nach dem Eingang der Anmeldung eingereicht wurden und die nicht in dieser Patentschrift enthalten sind.

(30) Priorität : **28.06.89 AT 1585/89**

(43) Veröffentlichungstag der Anmeldung :
**02.01.91 Patentblatt 91/01**

(45) Bekanntmachung des Hinweises auf die Patenterteilung :
**16.12.92 Patentblatt 92/51**

(84) Benannte Vertragsstaaten :
**AT DE FR GB IT LU NL SE**

(56) Entgegenhaltungen :
**EP-A- 0 190 398**

(73) Patentinhaber : **Semperit Reifen Aktiengesellschaft Wienersdorferstrasse 20-24 A-2514 Traiskirchen (AT)**

(72) Erfinder : **Beckmann, Otto, Dr. Kapellengasse 5/1/5/21 A-2514 Traiskirchen (AT)**

(74) Vertreter : **Vinazzer, Edith Semperit Reifen Aktiengesellschaft Patentabteilung Wienersdorferstrasse 20-24 A-2514 Traiskirchen (AT)**

## Beschreibung

Die Erfindung betrifft eine Kautschukmischung, die beim Vulkanisieren eine dauerhafte Bindung zu Kupferlegierungen, insbesondere zu Messing oder vermessingtem Stahl, eingeht.

Die Funktionstüchtigkeit und die Lebensdauer von Kautschukprodukten, die in elastomeres Material eingebettete metallische Festigkeitsträger aufweisen, wie beispielsweise Fahrzeugreifen, technische Schläuche oder Fördergurten, ist in einem hohen Ausmaß von einem dauerhaften Verbund zwischen den Festigkeitsträgern und der diese umgebenden vulkanisierten Kautschukmischung abhängig.

Als Festigkeitsträger werden vor allem vermessingte Stahlkorde verwendet, die in der Regel nicht präpariert werden. Die Haftung muß also direkt zwischen der vermessingten Stahlkordoberfläche und der die sie umgebenden Kautschukmischung während der Vulkanisation aufgebaut werden. Dazu werden den sogenannten "Haftmischungen" spezielle Haftvermittler beigemengt. Nach dem Stand der Technik kann man prinzipiell zwei Haftsysteme unterscheiden, nämlich die "Kobaltsysteme" und die "Resorcinharzsysteme". Auch Kombihaftsysteme, also Kombinationen von aus Kobaltsystemen und Resorcinharzsystemen sind bekannt und für die Stahlkordhaftung auch von technischer Bedeutung.

Haftmischungen unter Einsatz von Kobalt sind meist schwefelreich und enthalten Kobalt in Form organischer Salze, also als Kobaltseifen, wobei insbesondere Kobalt-Oktoat, Kobalt-Stearat, Kobalt-Naphthenat oder Kobalt-Harzseifen verwendet werden. In letzter Zeit werden zunehmend auch organische Kobalt-Bor-Komplexe eingesetzt, die hinsichtlich der Alterung Vorteile bringen sollen.

Klassische Kobalthaftmischungen verlangen oft hohe Schwefelmengen, so daß das Mischen und Verarbeiten sehr schonend durchgeführt werden muß, um Schwefelausblühungen zu vermeiden. Gegenüber Harzhaftsystemen weisen Kobalthaftsysteme auf der einen Seite den Vorteil einer höheren Korrosionsbeständigkeit auf, auf der anderen Seite jedoch den Nachteil einer geringeren Beständigkeit gegenüber oxidativer Alterung. Ferner kann der Einsatz von Kobalt toxikologisch problematisch sein, da kobalthaltige Stäube als krebserregend gelten.

Das typische klassische Harzhaftsystem enthält die Komponenten Resorcin, Hexamethylentetramin (HEXA) und aktive gefällte Kieselsäure. HEXA, das auch fallweise als basischer Beschleuniger verwendet wird, hat hiebei die Aufgabe eines Methylendonators. Gemeinsam mit dem Resorcin bildet es während der Vulkanisation ein Resorcinharz, welches nicht nur die Haftung verbessert, sondern auch die Spannungswerte und die Härte der Vulkanisate erhöht.

Es gibt eine Vielzahl von Möglichkeiten, das Haftsystem Resorcin/HEXA/Kieselsäure zu variieren, u.a. den Ersatz von Resorcin und HEXA durch den Resorcin/HEXA/-I/I-Komplex oder den Resorcin/HEXA/Borsäure-I/I/I-Komplex, den Ersatz von HEXA durch andere Methylendonatoren, beispielsweise Hexamethylolmelaminhexamethyläther (HMMM), und den Ersatz des Resorcins durch Harze, die auf Resorcin oder Resorcinderivaten basieren, die zusätzlich auch andere Phenole oder Triazinderivate enthalten können. Die Vulkanisationsgeschwindigkeit von Kautschukmischungen mit solchen Harzhaftsystemen ist deutlich langsamer als jene von Kautschukmischungen mit Resorcinhaftsystemen. Das gilt meist auch dann noch, wenn der Anteil der vulkanisationsverzögernden Kieselsäure abgesenkt wird.

Kautschukmischungen unter Verwendung des klassischen Haftsystems Resorcin/HEXA/Kieselsäure sind den meisten anderen Harzzsystemen hinsichtlich mechanischer Eigenschaften und Anfangshaftung überlegen. Vor allem lassen sich hohe Elastizität und gute Spannungswerte bei guter Beständigkeit gegen dynamisch bedingte Brüche im Bereich der Festigkeitsträger erreichen. Ein gravierender Nachteil derartiger Vulkanisate besteht jedoch in der geringen Feuchtebeständigkeit der Haftung zu Messing. Das trifft auch auf Vulkanisate unter Verwendung der diversen abgewandelten HEXA-haltigen Haftsysteme zu. Wird HMMM anstelle von HEXA eingesetzt, so wird eine bedeutend höhere Feuchtebeständigkeit erzielt.

Bei der Verarbeitung der Kautschukmischungen ist freies Resorcin toxikologisch problematisch, da es beim Einmischen unter Bildung weißer beißender Schwaden abraucht. Auch die Methylendonatoren sind toxikologisch nicht unbedenklich, da sie Formaldehyd freisetzen.

Der Erfindung liegt nun die Aufgabe zugrunde, Kautschukmischungen mit einem Haftsystem zu versehen, welches die Nachteile der bekannten Haftsysteme nicht aufweist und somit toxikologisch unbedenklich ist und sich problemlos mischen und verarbeiten läßt. Die Vulkanisate sollen eine gute Haftung, insbesondere auch nach Alterung, vor allem zu Messing bzw. vermessingten Stahlkorden aufweisen und ihre physikalischen Eigenschaften sollen zumindest jenen von Vulkanisaten aus Haftmischungen nach dem Stand der Technik gleichkommen.

Gelöst wird die gestellte Aufgabe erfindungsgemäß dadurch, daß als Haftzusatz 0,2 bis 15 Gew.-teile, vorzugsweise höchstens 6 Gew.-teile, bezogen auf 100 Gew.-teile Kautschuk, zumindest eines Monosaccharides aus der Gruppe der Ketosen beigemengt ist.

Nach der Erfindung wird demnach als Haftzusatz Zucker verwendet. Die Zucker sind organisch reine Substanzen, die toxikologisch gänzlich unbedenklich sind. Die Wirkung von Monosacchariden, insbesondere von Ketosen, als der die Haftung bewirkende Mischungsbestandteil läßt sich dadurch erklären, daß während der Vulkanisation Umwandlungsprodukte, beispielsweise Furanharze sowie andere heterozyklische Harze entstehen. Trotzdem war es höchst überraschend, schon mit einer geringen Menge von Ketosen eine starke Erhöhung der Haftung, insbesondere zu Messing, festzustellen. Es ist möglich, mit dem erfindungsgemäßen Haftsystem eine Haftung zu erzielen, die der Haftung von Kautschukmischungen mit Kobalthaftsystemen nicht nur gleichkommt, sondern diese sogar übertreffen kann. Vor allem konnten exzellente Werte hinsichtlich der Feuchtebeständigkeit und der oxidativen Alterung festgestellt werden.

Besonders vorteilhafte Weiterentwicklungen der Erfindung sind in den Unteransprüchen gekennzeichnet. So ist es vor allem günstig, wenn als Haftzusatz das Monosaccharid Fructose verwendet wird. Fructose hat den Vorteil, daß ihr Schmelzpunkt bei 106° C liegt und somit innerhalb der üblichen Fertigmischtemperaturen von 100 bis 115° C. Fructose ist weiters großtechnisch herstellbar und steht somit in ausreichender Menge, insbesondere auch in Pulverform, was das Einmischen der Fructose problemlos gestaltet, zur Verfügung.

Es hat sich weiters herausgestellt, daß der Kautschukmischung gemäß der Erfindung keine organischen Säuren, und zwar weder in ihrer freien Form noch in Form von Salzen, beigemengt zu werden braucht. Dieser Umstand wirkt sich sehr günstig auf die Korrosionsbeständigkeit des in die Vulkanisate aus der erfindungsgemäßen Mischung eingebetteten metallischen Materials aus. Demgegenüber kann sowohl bei Kobalthaftsystemen als auch bei Harzhaftsystemen auf organische Säuren bzw. deren Salze kaum verzichtet werden. Kobalthaftsysteme enthalten überhaupt von vornherein schon Kobaltseifen. In Harzhaftsystemen bedingt vor allem die Kieselsäurebeimengung hohe Mischungsviskositäten, die durch Beimengung von Säuren, wie etwa Stearinsäure oder Zinkseife, vermindert werden.

Die Erfindung betrifft weiters Vulkanisate aus Kautschukmischungen gemäß der Erfindung, in welche Verstärkungsfäden, -drähte,-korde aus einer Kupferlegierung, insbesondere aus Messing oder vermessingtem stahl eingebettet sind.

Von besonderem Vorteil ist die Verwendung von Kautschukmischungen gemäß der Erfindung bei der Herstellung von Reifen, Fördergurten oder Schläuchen, die in eine vulkanisierte Kautschukmischung gemäß der Erfindung eingebettete Verstärkungsfäden, -drähte oder -korde aus einer Kupferlegierung, insbesondere aus Messing oder vermessingtem Stahl, aufweisen.

Im folgenden wird nun anhand einiger Mischungsbeispiele die vorliegende Erfindung näher erläutert. Hiebei zeigt Tabelle 1 vier als Testmischungen T1 bis T4 bezeichnete Mischungen im Vergleich. Diese Mischungen sind an sich keine typischen Haftmischungen, zeigen aber besonders gut die Wirkung eines Zusatzes von Fructose.

Die Mischung T1 enthält keinen Fructoseanteil. Der Mischung T2 wurden zusätzlich 0,8 Gew.-teile Fructose, der Mischung T3 1,5 Gew.-teile Fructose und der Mischung T4 5,0 Gew.-teile Fructose, jeweils bezogen auf 100 Gew.-teile Kautschuk, beigemengt. Die übrigen Mischungsbestandteile wurden jeweils gleichgelassen.

Es wurde die Stahlkordhaftung der vier Testmischungen zu NCC (normal copper coating) vermessingtem Draht überprüft. Hiebei wurde eine nicht genormte Prüfmethode angewandt, die jedoch eine sehr gute Reproduzierbarkeit der Ergebnisse gewährleistet. Es handelt sich hiebei um die CSRC-Methode, wie sie in Rubber Chemistry and Technology 45/1 (1972), Seiten 26 bis 48 (A. E. Hicks, V.E. Chirico, J.O. Ulmer: An improved wire adhesion test method) beschrieben ist. Diese Prüfmethode wurde
leicht modifiziert angewandt.


Prüfkörper:


| Einbettlänge: | 20 mm |
|---|---|
| Blockhöhe: | 12 mm davon je eine 1 mm dicke geprimte Stahlplatte an jeder Stirnseite |
| Stahlkord: | 3+9+15 x 0,22 + 1 x 0,15 Baekert NCC (67 % Cu) |
| Kordanzahl: | 18 |
| Abziehgeschwindigkeit: | 50 mm/min |
| Zahl der Prüfkorde: | 5 |
| Haftung : | Es ist jeweils die maximale Ausreißkraft [N] angegeben. |
| Bedeckung : | Die Gummibedeckung der Stahlkordoberfläche wird durch Bewertungsnoten von 1 bis 5 klassiert. Es bedeuten: |

Note 1: volle Gummibedeckung der Haftzone

Note 2: außer vereinzelten Blankstellen volle Gummibedeckung der zum Gummi grenzenden Kordlagen, event. blanke Wendelkuppen

Note 3: örtliche blanke Kordstellen in max. Ausmaß von ca. 40 % der Haftzone

Note 4: örtliche blanke Kordstellen von über 50 % der Haftzone

Note 5: über 90 % blanke Stahlkordoberfläche

Wie aus Tabelle 1 ersichtlich ist, liegt schon im nicht gealterten Zustand die erforderliche Ausreißkraft für die Vulkanisate aus den Testmischungen T2, T3 und T4 um einiges höher als beim Vulkanisat aus Testmischung T1. Nach sieben Tagen Luftalterung bei 100° C zeigen insbesondere die Werte des Vulkanisates aus Testmischung T3 eine wesentliche Verbesserung gegenüber jenen des Vulkanisates aus Testmischung T1. Nach 21 Tagen Feuchtealterung bei 70° C und 100 % relativer Luftfeuchtigkeit erreichen die Vulkanisate aus Testmischung T3 und T4 die Stahlkordhaftung ausgezeichneter Haftmischungen. Auch die Stahlkordhaftung der Vulkanisate aus Testmischung T2 ---- ist um einiges besser als jene des Vulkanisates aus Testmischung T1.

Vergleicht man weitere Mischungseigenschaften, so fällt auf, daß die Fructosebeimengung die Anvulkanisationszeit verkürzt. Bei den physikalischen Eigenschaften der Vulkanisate ist durch den Fructosezusatz ein Anheben der Weiterreißfestigkeit feststellbar, was etwa im Hinblick auf das bekannte Problem der Gürtelkantenlockerungen bei Radialreifen von Bedeutung ist. Sonst bewirkt der Fructoseanteil, sieht man von einer geringen aber signifikanten Verminderung der Rückprallelastizität ab, keine wesentliche Änderung physikalischer Eigenschaften.

Höhere Dosierungen als 5 Gew.-teile Fructose sind möglich, bringen aber kaum noch Vorteile hinsichtlich Haftung oder Weiterreißfestigkeit. Dosierungen, die 15 Gew.-teile Fructose überschreiten, sollten vermieden werden, da dies neben einem starken Absenken der Vernetzungsdichte einen weitgehenden Verlust der Anfangshaftung zur Folge hätte.

In Tabelle 2 sind weitere Mischungen bzw. deren Vulkanisate miteinander verglichen. Die Mischungen M1 und M2 sind Mischungen, wie sie etwa als Gürtelaufpreßmischungen bei Fahrzeugreifen typischerweise verwendet werden, wobei die Mischung M1 eine Haftmischung mit Hexamethylolmelaminhexamethyläther (HMMM) ist und die Mischung M2 ein Kobalthaftsystem mit Kobaltnaphthenat enthält. Die Mischung M3 ist ein gemäß der Erfindung mit Fructose versetzte Mischung. Die physikalischen Eigenschaften der aus diesen Mischungen hergestellten Vulkanisate können ebenfalls der Tabelle entnommen werden.

Die Haftungsprüfung zu NCC vermessingten Draht erfolgte wiederum nach der CSRC-Methode, die Prüfbedingungen entsprechen jenen, die bereits oben erläutert sind.

Im ungealterten Zustand war hiebei die Haftung des Vulkanisates aus Mischung M2 geringfügig besser als jene des Vulkanisates aus Mischung M3. Es war jedoch die Haftung des Vulkanisates aus Mischung M3 deutlich besser als jene des Vulkanisates aus Mischung M1. Nach 14 Tagen Feuchtealterung bei 70° C und 100 % relativer Luftfeuchte war die Haftung des Vulkanisates aus Mischung M3 eindeutig überlegen. Die ermittelte Ausreißkraft von 105 N bei einer Bedeckung von 2 kann als sehr gut bezeichnet werden. Für eine Haftmischung gemäß der Erfindung können ohne weiteres Kautschukarten verwendet werden, wie sie üblicherweise bei Haftmischungen nach dem Stande der Technik verwendet werden. Es hat sich aber herausgestellt, daß es günstig ist, den Haftmischungen nach der Erfindung bestimmte Beschleunigertypen, beispielsweise CBS, DCBS oder TBBS in einer Menge von 0,5 bis 5 Gew.-teilen, bezogen auf 100 Gew.-teile Kautschuk, beizumengen.

Von Vorteil ist weiters, daß bei Haftmischungen gemäß der Erfindung auf die Beimengung von organischen Säuren, und zwar weder in ihrer freien Form noch in Form von Salzen, verzichtet werden kann, was sich günstig auf die Korrosionsbeständigkeit der in das entstehende Vulkanisat eingebetteten metallischen Verstärkungselemente auswirkt.

Das Einmischen der Fructose erfolgt zweckmäßigerweise bei einer Mischtemperatur, die höher als 105° C gewählt wird, so daß ein Aufschmelzen der Fructose stattfinden kann. Beim Einmischen in die Fertigmischung sollte die Mischungstemperatur 130° C nicht übersteigen, insbesondere bei ca. 118° bis 120° C liegen. Auch ein Einmischen der Fructose in die Hilfsmischung ist möglich, wobei dann die maximale Mischungstemperatur etwas höher sein kann, jedoch ca. 160° nicht übersteigen sollte.

Auch andere Monosaccharide aus der Gruppe der Ketosen sind prinzipiell geeignet, als Haftzusatz verwendet zu werden. Hier bieten sich vor allem Sorbose, Gemische aus Fructose und Sorbose, oder aus Fructose und anderen Ketosen, an. Weitere Ketosen können eingesetzt werden, doch stellt sich hier leicht das Problem, daß ausreichende Mengen dieser Ketosen kaum zur Verfügung stehen.

Von besonderer Bedeutung ist der Einsatz von Kautschukmischungen nach der Erfindung bei der Herstellung von Fahrzeugreifen. Hier bietet sich eine Verwendung als Aufpreßmischung für die Gürtellagen oder die Radiallagen an, was im Hinblick auf die hohen dynamischen und thermischen Beanspruchungen und die korrosiven Bedingungen während des Betriebes von Reifen große Vorteile bringt. Auch bei der Fördergurtherstellung und der Herstellung von technischen Schläuchen stellt sich oft das Problem, daß die metallischen Verstärkungselemente besonders dauerhaft eingebunden werden sollen. Auch hier können nach der Erfindung erstellte Kautschukmischungen besonders vorteilhaft eingesetzt werden.

TABELLE 1

| Mischung | T1 | T2 | T3 | T4 |
|---|---|---|---|---|
| NR mastiziert ① | 80 | 80 | 80 | 80 |
| BR (Kobalt-Typ) ② | 20 | 20 | 20 | 20 |
| N330 (Ruß HAF) | 60 | 60 | 60 | 60 |
| Zinkoxid RS | 8 | 8 | 8 | 8 |
| Stearinsäure | 0,5 | 0,5 | 0,5 | 0,5 |
| Mineralöl aromatisch | 5 | 5 | 5 | 5 |
| 6PPD ③ | 1 | 1 | 1 | 1 |
| D-Fructose ④ | 0 | 0,8 | 1,5 | 5 |
| CBS ⑤ | 1 | 1 | 1 | 1 |
| Schwefel unlöslich | 2,8 | 2,8 | 2,8 | 2,8 |
| **Vulkametrie DIN 53529** <br> **150° C Göttfert Elastograph** | | | | |
| $t_{10}$ [min] | 3,9 | 1,3 | 1,1 | 0,8 |
| $t_{90}$ [min] | 7,1 | 6,1 | 8,1 | 7,9 |
| Heizbedingungen [min] | 20 | 20 | 20 | 20 |
| [°C] | 150 | 150 | 150 | 150 |
| **Zugversuch DIN 53504** | | | | |
| Festigkeit [MPa] | 21,6 | 22,0 | 21,4 | 20,9 |
| Bruchdehnung [%] | 360 | 351 | 365 | 400 |
| Spannungswert 50 % [MPa] | 2,2 | 2,2 | 2,1 | 1,9 |
| Spannungswert 150 % | 8,3 | 8,4 | 8,0 | 6,1 |
| Spannungswert 300 % | 19,7 | 20,0 | 18,4 | 15,1 |
| Shore Härte A DIN 53505 | 72 | 71 | 72 | 72 |
| Rückprallelastizität [%] DIN 53512 | 50 | 49 | 49 | 47 |
| Weiterreißversuch [N/mm] DIN 53515 | 16 | 24 | 28 | 26 |
| **Statische Haftungsprüfung CSRC** | | | | |
| Stahlkord-Gummi (34'/150°C) | | | | |
| ungealtert Haftung [N] | 112 | 148 | 156 | 151 |
| Bedeckung [Note] | 3 | 2 | 2 | 2 |
| 7 Tage 100°C Luft Haftung [N] | 86 | 87 | 102 | 107 |
| Bedeckung [Note] | 2-3 | 2 | 2 | 2 |
| 21 Tage 70°C , 100% rel.Feuchte | | | | |
| Haftung [N] | 77 | 98 | 115 | 116 |
| Bedeckung [Note] | 4-5 | 2 | 2 | 2 |

① Sheet 3 roh, mechanisch abgebaut
② Cariflex® 1220 (Shell)
③ N-(1,3-Dimethylbutyl)-N'-phenyl-p-phenylendiamin (Alterungs- u. Ozonschutzmittel
④ Fructan, feinkristalline Lebensmittelqualität (Laevosan GmbH. Linz)
⑤ Benzothiazyl-2-cyclohexylsulfenamid (Beschleuniger)

5

TABELLE 2

| Mischung | M1 * | M2 ** | M3 |
|---|---|---|---|
| NR mastiziert [1] | 100 | 50 | 80 |
| IR (Titan-Typ) [2] | | 50 | 20 |
| N330 (Ruß HAF) | 45 | | |
| N326 (Ruß HAF-LS) | | 60 | 65 |
| Kieselsäure aktiv gefällt [3] | 15 | | |
| Zinkoxid | 5 | 8 | 8 |
| Stearinsäure | 2 | 1,3 | |
| Mineralöl aromatisch | 6,2 | | 5 |
| Klebrigmacher [4] | | 2 | 2 |
| IPPD [5] | | 1 | 1 |
| TMQ [6] | 1 | 1 | |
| Resorcin | 1,5 | | |
| Kobaltnaphthenat 11% Co [7] | | 2,5 | |
| D-Fructose [8] | | | 1,8 |
| HMMM [9] | 1,5 | | |
| TBBS [10] | 1,25 | | |
| DCBS [11] | | 0,7 | |
| CBS [12] | | | 2 |
| Schwefel unlöslich | 4,8 | 6,7 | 4 |
| CTP [13] | 0,2 | 0,15 | |
| Heizbedingungen [min] | 20 | 20 | 20 |
| [°C] | 150 | 150 | 150 |
| Zugversuch (DIN 53504) | | | |
| Festigkeit [MPa] | 16,8 | 16,4 | 18,6 |
| Bruchdehnung [%] | 275 | 301 | 355 |
| Spannungswert 50% [MPa] | 2,6 | 3,1 | 2,2 |
| Spannungswert 150% | 9,0 | 8,8 | 7,1 |
| Spannungswert 300% | 19,8 | 18,0 | 17,1 |
| Shore Härte A (DIN 53505) | 76 | 79 | 74 |
| Rückprallelastizität [%] (DIN 53512) | 45 | 40 | 45 |
| Weiterreißversuch [N/mm] (DIN 53515) | 21 | 19 | 19 |

TABELLE 2  -Fortsetzung

| Mischung | M1 * | M2 ** | M3 |
|---|---|---|---|
| Statische Haftungsprüfung  CSRC | | | |
| Stahlkord-Gummi (34'/150°) | | | |
| ungealtert    Haftung    [N] | 135 | 161 | 152 |
| Bedeckung    [Note] | 3 | 1-2 | 2 |
| 14 Tage, 70°C, 100% rel.Feuchte | | | |
| Haftung    [N] | 64 | 92 | 105 |
| Bedeckung    [Note] | 4 | 3 | 2 |

1  Sheet 3 roh, mechanisch abgebaut

2  Natsyn® 2200 (Goodyear)

3  Ultrasil VN3 (Degussa)

4  Kondensationsprodukt aus para-t-Butylphenol mit Acetylen  (BASF)

5  N-Isopropyl-N'-phenyl-p-phenylendiamin  (Alterungs- und Ozonschutz-Mittel)

6  2,2,4-Trimethyl-1,2-dihydrochinolinpolym    (Alterungsschutzmittel)

7  Soligen® Co 11%  (Borchers)

8  Fructan, feinkristalline Lebensmittelqualität (Laevosan GmbH. Linz)

9  Cyrez 963 (Cyanamid)

10  Benzothiazyl-2-tert.-butylsulfenamid  (Beschleuniger)

11  Benzothiazyl-2-dicyclohexylsulfenamid  (Beschleuniger)

12  Benzothiazyl-2-cyclohexylsulfenamid (Beschleuniger)

13  Cyclohexylthiophthalimid  (Verzögerer)

*  siehe M.P. Wagner, N.L. Hewitt: Mischungsherstellung für eine dynamische Adhäsion von Kautschuk auf Stahlcord; Kautschuk, Gummi, Kunststoffe 37 (1984), Seiten 688-693

**  siehe J. Sprung, K. Burmester: Stahlcordhaftmischungen - Entwicklung, Prüfung, Bewertung Kautschuk, Gummi, Kunststoffe 33 (1980), Seiten 611-616

**Patentansprüche**

1.  Kautschukmischung, die beim Vulkanisieren eine dauerhafte Bindung zu Kupferlegierungen, insbesondere zu Messing oder vermessingtem Stahl eingeht, dadurch gekennzeichnet, daß als Haftzusatz 0,2 bis 15 Gew.-teile, bezogen auf 100 Gew.-teile Kautschuk, zumindest eines Monosaccharides aus der Gruppe der Ketosen beigemengt ist.

2.  Kautschukmischung nach Anspruch 1, dadurch gekennzeichnet, daß sie höchstens 6 Gew.-teile, bezogen auf 100 Gew.-teile Kautschuk, des Haftzusatzes enthält.

3.  Kautschukmischung nach Anspruch 1 oder 2, dadurch gekennzeichnet, daß der Haftzusatz Fructose ist.

4.  Kautschukmischung nach Anspruch 1 oder 2, dadurch gekennzeichnet, daß der Haftzusatz ein Gemisch aus Fructose und anderen Ketosen ist.

5.  Kautschukmischung nach Anspruch 4, dadurch gekennzeichnet, daß der Haftzusatz ein Gemisch aus Fructose und Sorbose ist.

6.  Kautschukmischung nach einem der Ansprüche 1 bis 5, dadurch gekennzeichnet, daß sie keine organischen Säuren, weder in freier Form noch in Form von Salzen, enthält.

7.  Kautschukmischung nach einem der Ansprüche 1 bis 6, dadurch gekennzeichnet, daß sie als Beschleuniger Benzothiazyl-2-cyclohexylsulfenamid (CBS), Benzothiazyl-2-dicyclohexylsulfenamid (DCBS) oder Benzothiazyl-2-tert.-butylsulfenamid (TBBS) in einer Menge von 0,5 bis 5 Gew.-teilen, bezogen auf 100 Gew.-teile Kautschuk, enthält.

8.  Vulkanisiertes Material aus einer Kautschukmischung gemäß einer der Ansprüche 1 bis 7, dadurch gekennzeichnet, daß Verstärkungsfäden, -drähte, -korde aus einer Kupferlegierung, insbesondere aus Messing oder vermessingtem Stahl, eingebettet sind.

9.  Verwendung der Kautschukmischung nach einem der Ansprüche 1 bis 7 bei der Herstellung von Reifen, Fördergurten oder Schläuchen mit einer dauerhaften Bindung zwischen der vulkanisierten Kautschukmischung und darin eingebetteten Verstärkungsfäden, -drähten, -korden aus einer Kupferlegierung, insbesondere aus Messing oder vermessingtem Stahl.

**Claims**

1.  Rubber mixture, which forms, during vulcanisation, a durable bond with copper alloys, more especially with brass or brass-plated steel, characterised in that 0.2 to 15 parts by wt., relative to 100 parts by wt. rubber, of at least one monosaccharide included in the group of ketoses is admixed as an adhesive additive.

2.  Rubber mixture according to claim 1, characterised in that it contains at most 6 parts by wt., relative to 100 parts by wt. rubber, of the adhesive additive.

3.  Rubber mixture according to claim 1 or 2, characterised in that the adhesive additive is fructose.

4.  Rubber mixture according to claim 1 or 2, characterised in that the adhesive additive is a mixture of fructose and other ketoses.

5.  Rubber mixture according to claim 4, characterised in that the adhesive additive is a mixture of fructose and sorbose.

6.  Rubber mixture according to one of claims 1 to 5, characterised in that it contains no organic acids, neither in a free form nor in the form of salts.

7.  Rubber mixture according to one of claims 1 to 6, characterised in that it contains, as an accelerator, benzothiazyl-2-cyclohexylsulphenamide (CBS), benzothiazyl-2-dicyclohexylsulphenamide (DCBS) or benzothiazyl-2-tert.-butylsulphenamide (TBBS) in a quantity of 0.5 to 5 parts by wt., relative to 100 parts by wt.

rubber.

8. Vulcanised material formed from a rubber mixture according to one of claims 1 to 7, characterised in that reinforcing filaments, wires or cords, formed from a copper alloy, more especially from brass or brass-plated steel, are embedded therein.

9. Use of the rubber mixture according to one of claims 1 to 7 for the manufacture of tyres, conveyor belts or hoses with a durable bond between the vulcanised rubber mixture and reinforcing filaments, wires or cords which are embedded therein and are formed from a copper alloy, more especially from brass or brass-plated steel.

**Revendications**

1. Composition de caoutchouc qui engendre, lors de la vulcanisation, une liaison durable vis à vis des alliages de cuivre, notamment du laiton ou de l'acier laitonné, caractérisée en ce qu'on incorpore, en tant qu'additif d'adhésion, 0,2 à 15 parties en poids, par rapport à 100 parties en poids de caoutchouc, d'au moins un monosaccharide du groupe des cétoses.

2. Composition de caoutchouc selon la revendication 1, caractérisée en ce qu'elle contient tout au plus 6 parties en poids de l'additif d'adhésion, rapportées à 100 parties en poids de caoutchouc.

3. Composition de caoutchouc selon la revendication 1 ou 2, caractérisée en ce que l'additif d'adhésion est le fructose.

4. Composition de caoutchouc selon la revendication 1 ou 2, caractérisée en ce que l'additif d'adhésion est un mélange de fructose et d'autres cétoses.

5. Composition de caoutchouc selon la revendication 4, caractérisée en ce que l'additif d'adhésion est un mélange de fructose et de sorbose.

6. Composition de caoutchouc selon l'une des revendications 1 à 5, caractérisée en ce qu'elle ne contient pas d'acides organiques, que ce soit sous la forme libre ou sous la forme de sels.

7. Composition de caoutchouc selon l'une des revendications 1 à 6, caractérisée en ce qu'elle contient en tant qu'accélérateur du benzothiazyl-2-cyclohexylsulfénamide (CBS), du benzothiazyl-2-dicyclohexylsulfénamide (DCBS) ou du benzothiazyl-2-tert.butylsulfénamide (TBBS) en une quantité de 0,5 à 5 parties en poids, rapportées à 100 parties en poids de caoutchouc.

8. Matériau vulcanisé à partir d'une composition de caoutchouc selon l'une des revendications 1 à 7, caractérisé en ce que des fils, des fils métalliques, des câblés de renforcement en alliage de cuivre, notamment en laiton ou en acier laitonné, sont enrobés.

9. Utilisation de la composition de caoutchouc selon l'une des revendications 1 à 7 pour la fabrication de pneumatiques, de bandes transporteuses ou de tuyaux avec une liaison durable entre la composition de caoutchouc vulcanisée et les fils, fils métalliques, câblés de renforcement en alliage de cuivre, notamment en laiton ou en acier laitonné, lesquels sont enrobés de ladite composition.